# EUROPEAN PATENT APPLICATION

(11) **EP 4 773 711 A1**
(43) Date of publication of application: **08.07.2026**
(21) Application number: 24860270.8
(22) Date of filing: 14.08.2024
(51) Int. Cl.: H04W 74/04, H04W 74/00, H04W 74/0816, H04W 72/566, H04W 84/12, H04W 72/512, H04L 47/24, H04L 5/00, H04W 28/06

(54) **METHOD AND APPARATUS FOR TRANSMITTING AND RECEIVING TRAFFIC IN WIRELESS LAN SYSTEM**

(30) Priority: 29.08.2023 KR 20230114020; 29.08.2023 KR 20230114021; 01.09.2023 KR 20230116519; 01.09.2023 KR 20230116520; 08.05.2024 KR 20240060855
(71) Applicant: LG Electronics Inc., Yeongdeungpo-gu Seoul 07336 (KR)
(72) Inventor: JANG, Insun, Seoul 06772 (KR); CHOI, Jinsoo, Seoul 06772 (KR); BAEK, Sunhee, Seoul 06772 (KR); KIM, Geonhwan, Seoul 06772 (KR); YOON, Yelin, Seoul 06772 (KR); CHA, Dongju, Seoul 06772 (KR)
(74) Representative: Mooser, Sebastian Thomas
(86) International application number: PCT/KR2024/012125
(87) International publication number: WO 2025/048349

(57) **Abstract**

Disclosed are a method and an apparatus for operating in a wireless LAN system. A method performed by a first station (STA) in a wireless LAN system according to an embodiment of the present disclosure may comprise the steps of: receiving a first physical layer protocol data unit (PPDU) from an access point (AP); transmitting a block acknowledgement (ACK) (BA) frame for the first PPDU to the AP, the BA frame including low latency traffic (LLT) information; and transmitting, to the AP, LLT related to the LLT information within a transmission opportunity (TXOP), wherein the BA frame comprises at least one field related to whether the LLT information is included in the BA frame.

## Description

### [Technical Field]

The present disclosure relates to a method and device for transmitting and receiving traffic and information related to traffic in a wireless local area network (WLAN) system.

### [Background]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure relates to a method and device for transmitting and receiving traffic in a wireless LAN system.

The technical problem of the present disclosure relates to a method and device for transmitting information for a preemption operation related to low-latency traffic in a wireless LAN system.

The technical objects to be achieved by the present disclosure are not limited to the above-described technical objects, and other technical objects which are not described herein will be clearly understood by those skilled in the pertinent art from the following description.

### [Technical Solution]

According to one embodiment of the present disclosure, a method performed by a first station (STA) in a wireless local area network (WLAN) system may include receiving, from an access point (AP), a first physical layer protocol data unit (PPDU); transmitting, to the AP, a block acknowledgment (BA) frame for the first PPDU, wherein the BA frame includes low latency traffic (LLT) information; and transmitting, to the AP, an LLT related to the LLT information within a transmission opportunity (TXOP), and the BA frame may include at least one field related to whether the LLT information is included in the BA frame.

According to another embodiment of the present disclosure, a method performed by an access point (AP) in a wireless LAN system may include receiving, from at least one STA, a first physical layer protocol data unit; receiving, from the at least one STA, a block acknowledgment (BA) frame for the first PPDU, wherein the BA frame includes low latency traffic (LLT) information; and receiving, from the at least one STA, an LLT associated with the LLT information within a transmission opportunity (TXOP), and the BA frame may include at least one field related to whether the LLT information is included in the BA frame.

### [Technical Effects]

According to various embodiments of the present disclosure, a method and device for transmitting and receiving traffic in a wireless LAN system may be provided.

The technical problem of the present disclosure relates to a method and device for transmitting information for low-latency traffic preemption in a wireless LAN system.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram illustrating an exemplary format of a trigger frame to which the present disclosure may be applied.
FIG. 9 is a diagram illustrating issues related to LLT transmission in a DL (downlink) TXOP.
FIG. 10 is a diagram illustrating issues related to LLT transmission in an UL (uplink) TXOP.
FIG. 11 is a flowchart illustrating the operation of a first STA according to an embodiment of the present disclosure.
FIG. 12 is a flowchart illustrating the operation of an AP according to an embodiment of the present disclosure.
FIG. 13 is a diagram illustrating a method for an STA to report LLT information to an AP according to an embodiment of the present disclosure.
FIG. 14 is a diagram illustrating a method for transmitting LLT information using an HT control field according to an embodiment of the present disclosure.
FIG. 15 is a diagram illustrating the configuration of a BA frame including LLT information according to an embodiment of the present disclosure.
FIG. 16 is a diagram illustrating a procedure for transmitting and receiving a BA frame including LLT information according to an embodiment of the present disclosure.
FIG. 17 is a diagram illustrating the configuration of an LLT BA frame and a procedure for transmitting and receiving an LLT BA frame according to an embodiment of the present disclosure.
FIG. 18 is a diagram illustrating the configuration of an LLT BA frame for multi-TID and a procedure for transmitting and receiving an LLT BA according to an embodiment of the present disclosure.
FIG. 19 is a diagram illustrating the configuration of an LLT BA frame for multi-TID and a procedure for transmitting and receiving an LLT BA according to an embodiment of the present disclosure.
FIG. 20 is a diagram illustrating a method for transmitting LLT information using a MAC header according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

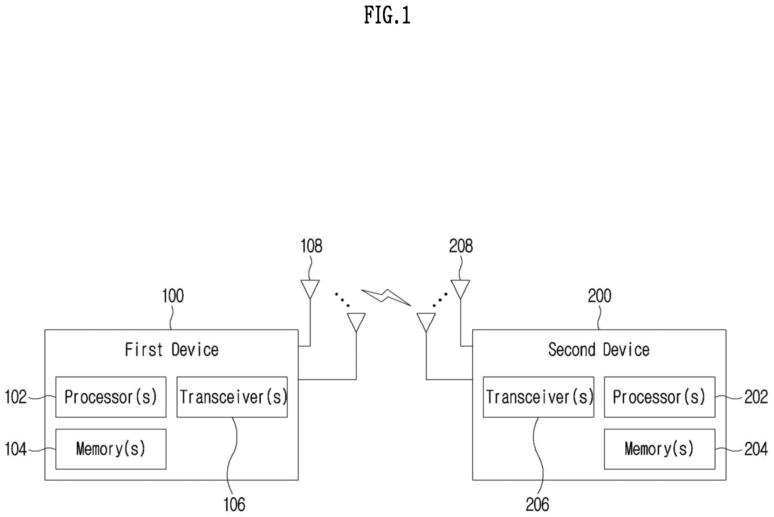

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

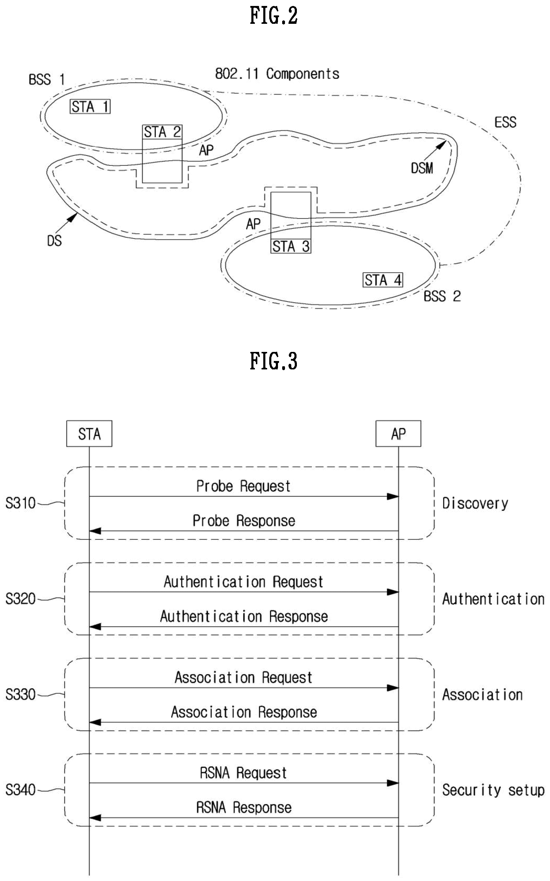

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

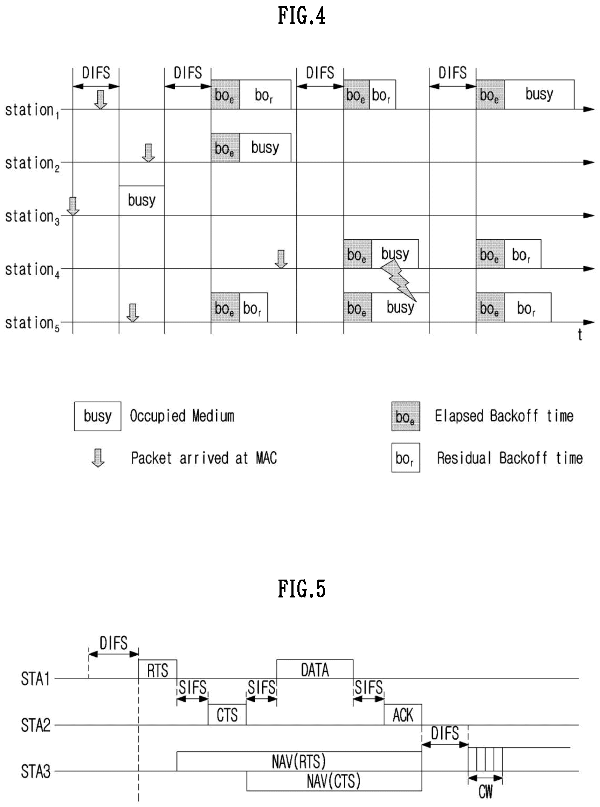

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

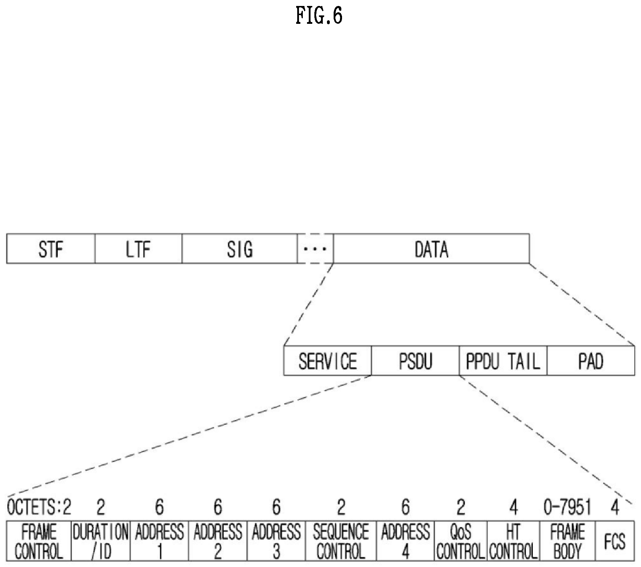

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

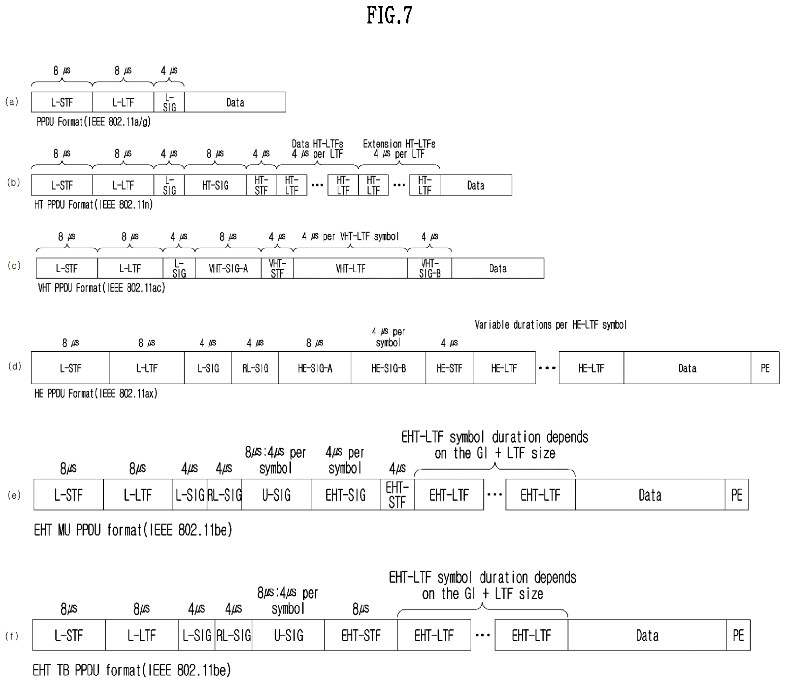

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

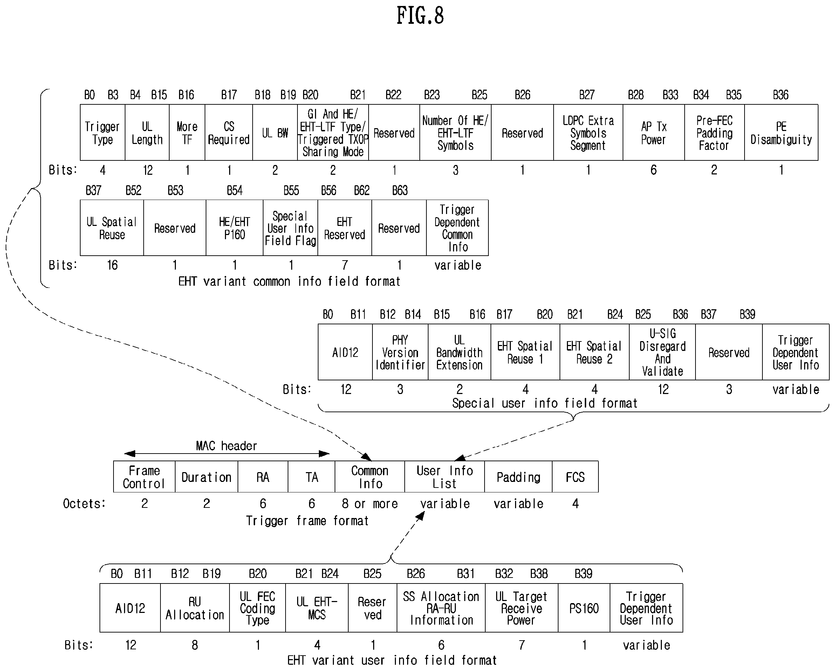

FIG. 8 is a diagram illustrating an example format of a trigger frame to which the present disclosure may be applied.

The trigger frame may allocate resources for transmission of one or more TB PPDUs and request transmission of TB PPDUs. The trigger frame may also include other information required by the STA, which transmits the TB PPDU in response. The trigger frame may include common information and user information list fields in the frame body.

The common info field is information commonly applied to the transmission of one or more TB PPDUs requested by a trigger frame, such as trigger type, UL length, presence or absence of a subsequent trigger frame (e.g., More TF), CS (channel sensing) request, UL BW (bandwidth), HE/EHT P160, special user info field flag, etc.

The 4-bit trigger type subfield may have values from 0 to 15. Among them, the values 0, 1, 2, 3, 4, 5, 6, and 7 of the trigger type subfield are defined to correspond to basic, BFRP (Beamforming Report Poll), MU-BAR (multi user-block acknowledgement request), MU-RTS (multi user-request to send), BSRP (Buffer Status Report Poll), GCR (groupcast with retries) MU-BAR, BQRP (Bandwidth Query Report Poll), and NFRP (NDP Feedback Report Poll), respectively, and the values 8 to 15 are defined as reserved.

Among the common information, the trigger dependent common info subfield may include information that is optionally included based on the trigger type.

A special user info field may be included in the trigger frame. The special user info field does not include user specific information, but includes extended common information that is not provided in the common info field.

The user info list includes zero or more user info fields. FIG. 8 illustrates an example of an EHT variant user info field format.

The AID12 subfield basically indicates that it is a user info field for the STA with the corresponding AID. In addition, if the AID12 field has a specific predetermined value, it may be used for other purposes, such as allocating a random access (RA)-RU or being configured as a special user info field. A special user info field is a user info field that does not include user-specific information but includes extended common information not provided in the common info field. For example, the special user info field may be identified by an AID12 value of 2007, and the special user info field flag subfield within the common info field may indicate whether the special user info field is included.

The RU allocation subfield may indicate the size and location of RU/MRU. For this purpose, the RU allocation subfield may be interpreted together with the PS160 (primary/secondary 160MHz) subfield of the user information field, the UL BW subfield of the common information field, etc.

### HT control field

Hereinafter, the HT control field included in the MAC header described with reference to FIG. 6 will be described in more detail.

The HT Control field may be present in a control wrapper frame, and may be present in QoS data, QoS Null, and management frames determined by the +HTC subfield of the frame control field.

An STA that supports the HT control field that receives a control wrapper frame may process it as if it had received a frame of a subtype of a wrapped frame. A HE STA may not transmit a control wrapper frame to another HE STA.

The HT control field may have a format as shown in Table 2 below.

**[Table 1]**

| Variant | B0 | B1 | B2-B29 | B30 | B31 |
|---|---|---|---|---|---|
| HT | 0 | HT Control Middle | | AC Constraint | RDG/More PPDU |
| VHT | 1 | 0 | VHT Control Middle | AC Constraint | RDG/More PPDU |
| HE | 1 | 1 | A-Control | | |

As disclosed in Table 1, the HT control field may include three variants (e.g., HT variant, VHT variant, and HE variant). The variant formats may be distinguished by the values of the first bit (B0) and second bit (B1) of the HT control field.

The HT variant HT control field may include an HT control middle subfield, and the VHT variant HT control field may include a VHT control middle subfield. The VHT control middle subfield may include an MRQ subfield, an MSI/STBC subfield, an MFSI/GID-L subfield, an MFB subfield, a GID-H subfield, a coding type subfield, an FB Tx type subfield, and an unsolicited MFB subfield.

The HE variant HT control field may include an aggregated control subfield. The A-control subfield may include a control list subfield of variable length and zero or more padding subfields. The control list may include one or more control subfields. A control subfield may include a 4-bit control ID subfield and a control information subfield of variable length.

The Control ID subfield may indicate the type of information conveyed in the Control Information subfield. The length of the Control Information subfield may be fixed for each value of the Control ID subfield that is not reserved. The values of the Control ID subfield and the associated lengths of the Control Information subfield may be defined as shown in Table 3 below.

**[Table 2]**

| Control ID Value | Meaning | Length of control information subfield (bits) |
|---|---|---|
| 0 | Triggered response scheduling (TRS) | 26 |
| 1 | Operating mode (OM) | 12 |
| 2 | HE link adaptation (HLA) | 26 |
| 3 | Buffer status report (BSR) | 26 |
| 4 | UL power headroom (UPH) | 8 |
| 5 | Bandwidth query report (BQR) | 10 |
| 6 | Command and status (CAS) | 8 |
| 7 | EHT OM | 6 |
| 8 | Single response scheduling (SRS) | 10 |
| 9 | AP assistance request (ARR) | 20 |
| 10-14 | Reserved | - |
| 15 | ONES(ones need expansion surely) | 26 |

Information corresponding to control ID values 0 to 6 may be defined in the A-control subfield of the HE variant HT control field. Information corresponding to control ID values 7 to 9 may be newly defined information for the EHT STA. Additionally, information corresponding to control ID value 10 (i.e., AAR) may correspond to control 1D value 9. In addition, if a padding subfield exists in the A-control subfield of the HE variant HT control field, the padding subfield follows the last control subfield and may be set to a sequence of zeros so that the length of the A-control subfield carried in the HT control field becomes 30 bits.

### Information transmission procedure for low-latency traffic preemption

In a basic wireless LAN system, STAs (e.g., non-AP STAs and/or APs) may perform channel access operations to transmit frames containing traffic. For example, the AP and/or non-AP STAs may obtain a transmission opportunity (TXOP) via Enhanced Distributed Channel Access (EDCA) and transmit frames within the obtained TXOP. As another example, the non-AP STAs may transmit frames in response to a trigger frame received from the AP.

That is, when specific traffic is input/generated in the transmission queue of the STA, the STA must perform channel access to transmit the specific traffic, thereby occupying the channel and/or obtaining a TXOP. Here, it is assumed that traffic requiring a significantly low delay (i.e., low-latency traffic) is input/generated in the transmission queue of the STA. In order for the STA to transmit the low-latency traffic, contention for channel access with other STAs is inevitable, and there is a problem that rapid transmission of the low-latency traffic is not guaranteed if other STAs have already obtained a TXOP.

In describing the present disclosure, traffic requiring low latency (e.g., traffic that must be successfully transmitted within X ms) is referred to as LLT (low latency traffic).

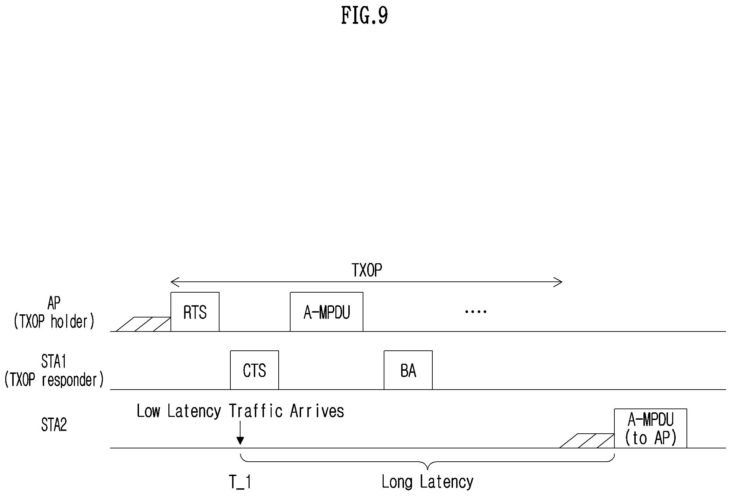

FIG. 9 is a diagram for explaining issues related to LLT transmission in DL (downlink) TXOP.

Specifically, as illustrated in FIG. 9, when an AP (i.e., a TXOP holder) acquires a (DL) TXOP through channel access and then performs frame exchange with STA 1 (i.e., a TXOP responder), the LLT to be transmitted to STA 2 from the AP may arrive at time T_1. STA 2 may set NAV due to the TXOP of the AP, or determine the channel status as BUSY due to the frame exchange between the AP and STA 1.

Therefore, STA 2 can transmit LLT after performing the back-off process again after the TXOP of AP. At this time, the length of the TXOP of AP may be long, and there is a possibility that another STA may obtain the TXOP depending on the contention result when STA 2 performs the back-off after the TXOP of AP. Accordingly, the LLT transmission of STA 2 may be significantly delayed, and there is a possibility that the LLT requirement may not be satisfied.

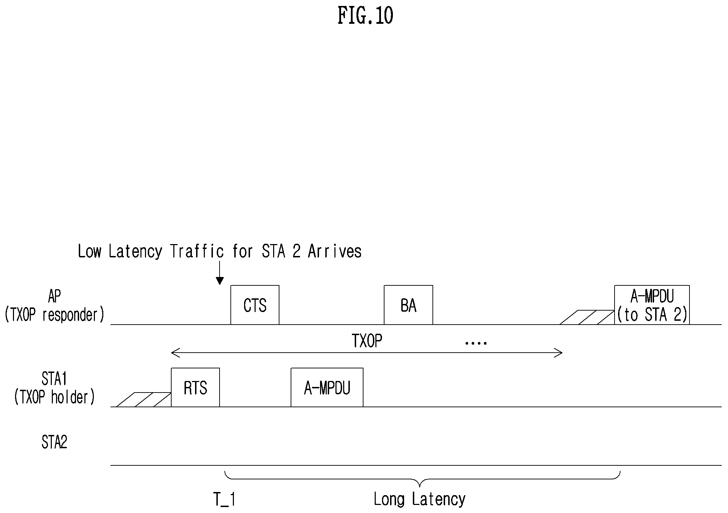

FIG. 10 is a diagram for explaining issues related to LLT transmission in UL (uplink) TXOP.

Specifically, as illustrated in FIG. 10, when STA 1 (i.e., TXOP holder) acquires (UL) TXOP through channel access and then performs frame exchange with AP (i.e., TXOP responder), LLT to be transmitted to STA 2 may arrive at AP at time T_1. Since AP is performing frame exchange within STA 1's TXOP, it cannot transmit LLT to STA 2. Therefore, AP may perform back-off process again after STA 1's TXOP and then transmit LLT to STA 2.

Here, the length of STA 1's TXOP may be long, and there is a possibility that another STA may acquire the TXOP depending on the competition result when the AP performs back-off after STA 1's TXOP. Accordingly, the LLT transmission of the AP may be significantly delayed, and there is a possibility that the LLT requirement may not be satisfied.

As in the examples described with reference to FIGS. 9 and 10, when an LLT that an STA needs to transmit quickly (i.e., an LLT with transmission-related requirements) arrives, there is a possibility that the STA may not be able to satisfy the requirements and transmit the LLT due to a TXOP length already acquired by another STA or a channel access delay caused by competition with other STAs. The present disclosure describes a method for resolving the above-described problem.

The names of the procedures and/or parameters described in this disclosure may be changed, and the STA may include a non-AP STA or an AP STA. In addition, in describing this disclosure, the RU (resource unit) may mean an RU or M (multiple) RU.

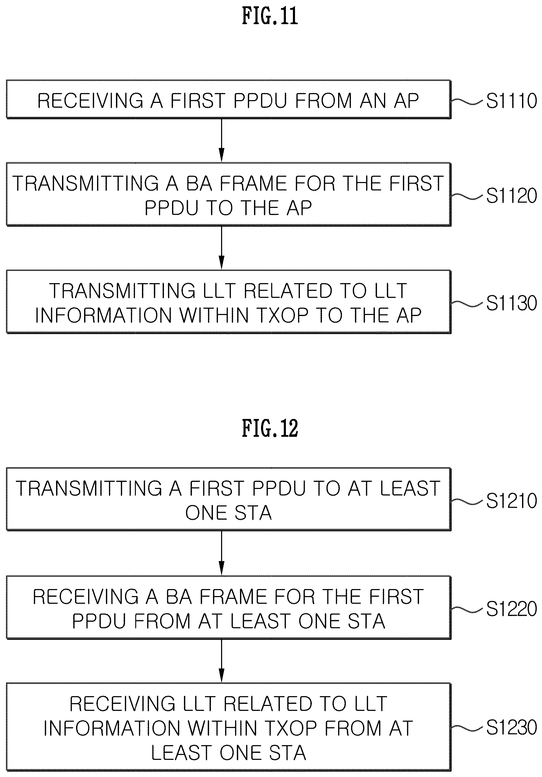

FIG. 11 is a flowchart illustrating the operation of a first STA according to one embodiment of the present disclosure. In FIGS. 11 and 12, each of the first STA and the second STA may be implemented as a non-AP STA or an AP, and the AP may be replaced with another non-AP STA.

The first STA may receive a first physical layer protocol data unit from an access point (AP) (S1110).

Here, the first STA may receive a PPDU from the AP within the TXOP acquired by the AP. That is, the AP may be a TXOP holder, and the first STA can be a TXOP responder. However, this is only an embodiment, and the first STA may be one of the non-AP STA(s) associated with the AP that is not a TXOP responder, and the second STA can be a TXOP responder. Here, the second STA may also perform the same operation as the first STA, which will be described later.

For example, the first PPDU may include an A-MPDU containing QoS data frames for one or more TIDs. Additionally or alternatively, the first PPDU may include information for triggering transmission of LLT information (e.g., a frame triggering LLT information).

Meanwhile, the first STA may generate/exist LLT before or/and after receiving the first PPDU. That is, the first STA may generate or exist LLT for transmission before or/and after receiving the first PPDU. The first STA may generate LLT information related to the LLT.

Here, the LLT information may include at least one of identification information of the LLT, information on a time point by which transmission of the LLT is to be completed, and information on an amount of the LLT.

The first STA may transmit a block acknowledgment (BA) frame for the first PPDU to the AP (S1120). Here, the BA frame may include low latency traffic (LLT) information.

Specifically, the BA frame may include at least one field related to whether LLT information is included in the BA frame. As an example, the at least one field may include an association identification (AID) 11 field, an ACK type field, and a traffic identifier (TID) field.

For example, based on the AID 11 field value being set to a first value, the ACK type field value being set to a second value, and the TID field value being set to a third value, the combination of the AID 11 field, the ACK type field, and the TID field may indicate that LLT information is included in the BA frame (or that the LLT information follows the AID 11 field, the ACK type field, and the TID field). In this case, {the first value, the second value, the third value} may be, but is not limited to, {2020, 0, 0} or {0, 0, 8}.

Additionally or alternatively, the BA Info field of the BA frame may include a Per AID TID Info field for LLT, and the Per AID TID Info field may include at least one field (e.g., an AID 11 field, an ACK type field, and a TID field) and a fragment number field.

For example, assume that the AID 11 field value is set to the first value, the ACK type field value is set to the second value, and the TID field value is set to the third value. Here, the length of the LLT information (i.e., the length of the field indicating the LLT information) or the entire length of a specific field including the LLT information may be indicated by the fragment number field. That is, the LLT information may be set in a part of the specific field. At this time, the field indicating the LLT information may be positioned on the BA frame following the fragment number field. For example, the LLT information may be positioned immediately after the fragment field (i.e., positioned adjacent to the fragment field), but is not limited thereto. The LLT information may be positioned after the fragment field, but may not be adjacent to it.

Additionally or alternatively, the BA information may include ACK information for at least one QoS data included in the first PPDU. That is, the first STA may transmit ACK information for the first PPDU (i.e., the data frame included in the first PPDU) to the AP together with the LLT information.

However, this is only one embodiment, and the first STA may transmit LLT information to the AP through the HT control field or/and the MAC header as well as the BA frame.

In describing the present disclosure, the name of the field indicating the length of LLT information (i.e., the length of the field indicating LLT information) or the total length of a specific field including LLT information may be varied in various ways, not just the fragment number field. In addition, the name and number of at least one field related to whether LLT information is included in a BA frame may be varied in various ways.

For example, based on the indication that LLT information exists on the BA frame by the PER AID TID Info field, the name of the field related to the LLT information (e.g., fragment field, at least one field described above) may be changed.

The first STA may transmit LLT related to LLT information within TXOP to the AP (S1130).

As an example of the present disclosure, a first STA may receive a trigger frame (e.g., a trigger frame for LLT transmission) from an AP after transmitting LLT information. The first STA may transmit LLT to the AP based on the trigger frame. However, this is merely an embodiment, and the first STA may transmit LLT to the AP after transmitting LLT information and a predefined time.

The above-described example describes a procedure in which the first STA transmits LLT after transmitting LLT information, but is not limited thereto. The first STA may also transmit LLT to the AP immediately after receiving the first PPDU.

The method described in the example of FIG. 11 may be performed by the first device (100) of FIG. 1. For example, one or more processors (102) of the first device (100) of FIG. 1 may receive a first PPDU from an AP through one or more transceivers (106). The one or more processors (102) may transmit a BA frame for the first PPDU to the AP through one or more transceivers (106).

Furthermore, one or more memories (104) of the first device (100) may store commands for performing the method described in the example of FIG. 11 or the examples described below when executed by one or more processors (102).

FIG. 12 is a flowchart for describing the operation of an AP according to one embodiment of the present disclosure.

The AP may transmit a first PPDU to at least one STA (S1210). For example, the AP may obtain a TXOP through an RTS frame and a CTS frame exchange with at least one STA (e.g., the first STA and/or the second STA). Then, the AP may transmit the first PPDU to at least one STA. For example, the first PPDU may include information that triggers transmission of a QoS data frame (e.g., a QoS data frame for at least one TID) and/or LLT information.

The AP may receive a BA frame for the first PPDU from at least one STA (S1220). Here, the BA frame may include at least one field related to whether LLT information is included in the BA frame. The configuration of the BA frame has been described with reference to FIG. 11, so a redundant description will be omitted.

The AP may check whether LLT is transmitted and received and/or information related to LLT through the LLT information included in the BA frame. If at least one STA has LLT, the AP may transmit a trigger frame to at least one STA.

The AP may receive LLT related to LLT information within TXOP from at least one STA (S1230).

The method described in the example of FIG. 12 may be performed by the second device (200) of FIG. 1. For example, one or more processors (202) of the second device (200) of FIG. 1 may transmit a first PPDU to at least one STA via one or more transceivers (206). The one or more processors (202) may receive a BA frame for the first PPDU from at least one STA via one or more transceivers (206). The one or more processors (202) may receive an LLT related to LLT information within a TXOP from at least one STA via one or more transceivers (206).

Furthermore, one or more memories (204) of the second device (200) may store commands for performing the method described in the example of FIG. 12 or the examples described below when executed by one or more processors (202).

Hereinafter, a method for transmitting information to preempt low-latency traffic is described in detail.

### Embodiment 1

Embodiment 1 relates to a procedure for reporting LLT information.

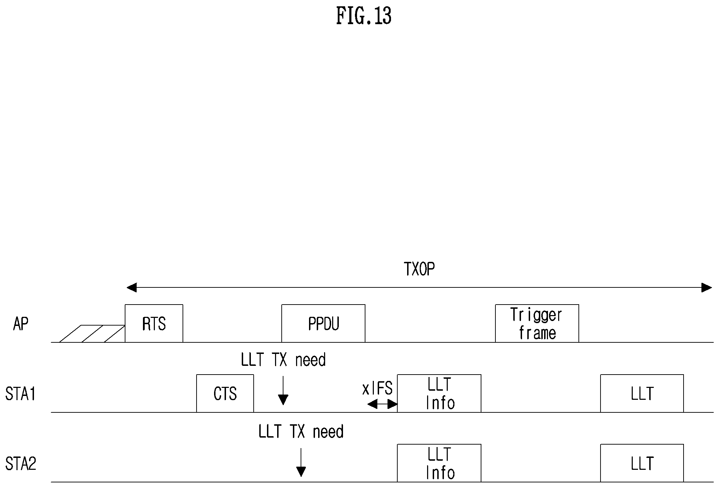

FIG. 13 is a diagram illustrating a method for an STA to report LLT information to an AP according to an embodiment of the present disclosure. In FIG. 13, "LLT TX need" means that an LLT that the STA must transmit quickly exists/occurs. For example, "LLT TX need" may mean that an LLT has been input/occurred in the STA or that an LLT that must be transmitted quickly according to a requirement exists.

Here, the operations of the AP and the STA in FIG. 13 can be replaced with the operations of the STA and the AP, respectively. That is, the operation of the AP in FIG. 12 can be replaced with the operation of another STA, and the operation of the STA in FIG. 13 can be replaced with the operation of the AP.

As illustrated in FIG. 13, the AP may transmit trigger information to one or more STAs so that LLT information can be transmitted via a PPDU. That is, the PPDU may include a trigger frame for requesting/triggering transmission of LLT information. Additionally, the PPDU may include a frame addressed to one or more STAs (e.g., a QoS data frame, etc.).

An STA that receives a PPDU/frame that triggers LLT information may transmit a frame/PPDU containing LLT information. A predefined time (e.g., SIFS, PIFS) may exist between the PPDU/frame that triggers LLT information and the frame containing LLT information.

An AP that receives LLT information from one or more STAs may transmit a frame (e.g., a trigger frame) that enables LLT transmission to one or more STAs. The one or more STAs that receive the frame may transmit a frame/PPDU containing LLT to the AP.

Additionally or alternatively, one or more STAs may transmit LLT information to the AP even if they do not receive a PPDU/frame that triggers LLT information. For example, in FIG. 13, LLT information may be included in a frame/PPDU containing LLT transmitted by one STA.

### Embodiment 1-1

Embodiment 1-1 relates to one or more types of information included in LLT information transmitted by an STA.

LLT information may include LLT presence information, LLT identification information, delay information, and/or amount of LLT information.

For example, the LLT presence information may indicate that an LLT that the STA is currently required to transmit exists. Additionally or alternatively, the LLT presence information may indicate within a TXOP of a specific STA whether the STA requests/desires to transmit an LLT.

LLT presence information may be supported by a field having 1 bit (e.g., LLT presence information field). For example, when the LLT presence information field value is set to 1 (or 0), this may indicate that an LLT that the STA should currently transmit exists or that the STA requests/wants to transmit LLT within the TXOP of a specific STA. For example, when the LLT presence information field value is set to 0 (or 1) or the field is reserved, this may indicate that an LLT that the STA should currently transmit does not exist or that the STA does not request/wants to transmit LLT within the TXOP of a specific STA.

As another example, the LLT identification information may include one or more ID information about the LLT to be transmitted. That is, the LLT identification information may include information about the LLT that needs to be transmitted. As an example, the LLT identification information may utilize a traffic identifier (TID). If the LLT corresponds to at least one of TIDs 0 to 7, the field indicating the LLT identification information may be set to 3 bits, and if the LLT corresponds to at least one of TIDs 8 to 15, the field indicating the LLT identification information may be set to 4 bits.

As another example of the present disclosure, a new LLT ID may be defined to indicate identification information of an LLT. For example, the LLT ID may be defined as an ID for distinguishing an LLT for each TID. For example, an LLT may be classified as a 2-tuple <TID, LL ID). For example, if LL IDs 0 to 3 are assigned to TID 6, LL traffic corresponding to TID 6 may be classified as <TID 6, LL ID 0>.

Additionally or alternatively, a bitmap may be defined to accommodate LLTs for one or more IDs. That is, the LLT identification information may be composed of a bitmap representing an LLT ID. For example, if a total of X LLT IDs are defined, the bitmap may be configured to indicate at most X LLT IDs.

For example, the delay information may include information about when the LLT should be transmitted.

For example, the delay information may include the time from the time the LLT information is transmitted or the time at which the transmission is completed to the time at which the LLT must be successfully transmitted. In this case, the delay information may indicate the time in µs units.

Additionally or alternatively, the delay information may indicate a point in time when the LLT should be successfully transmitted. For example, the delay information may indicate a point in time when the LLT should be successfully transmitted based on an absolute time, a time stamp (TSF).

Additionally or alternatively, assume that there is an LLT for more than one ID. That is, if there is an LLT for each of a plurality of IDs, an ID among the plurality of IDs whose transmission should be completed earlier is identified, and the delay information may include the time at which the transmission should be completed for that ID.

Additionally or alternatively, if there is an LLT for each of the plurality of IDs, the delay information may include the time at which each of the plurality of IDs should complete transmission.

For example, the amount of LLT information may include information about the amount of LLT that is currently to be transmitted. For example, the amount of LLT information may be configured in bytes.

Additionally or alternatively, if there is an LLT for more than one ID, the amount of the LLT information may indicate the amount of the LLT for all IDs. For example, the amount of the LLT information may be the sum of the amounts of the LLT for each of all IDs.

Additionally or alternatively, if there is an LLT for more than one ID, the amount information of the LLT may indicate the amount of LLT for each ID.

Additionally or alternatively, assume that TID is utilized for LLT. In this case, the amount information of LLT may indicate the amount of LLT for each AC (access category) to which the TID belongs. For example, if TID X and TID Y belong to AC 1, the amount information of LLT may indicate the sum of the LLT amounts of each of TID X and TID Y as the amount of LLT for AC 1.

### Embodiment 1-2

Embodiment 1-2 relates to a method for indicating/signaling LLT information. Specifically, LLT information can be indicated/signaled through an HT control field (Embodiment 1-2-1), a BA (black ack) frame (Embodiment 1-2-2), and a MAC header (Embodiment 1-2-3).

### Embodiment 1-2-1

In one embodiment of the present disclosure, LLT information may be transmitted and received via an HT control field (e.g., an A-control field). For example, LLT information may be included in a field defined as a new control type of the A-control field. The present disclosure refers to a control field for transmitting and receiving LLT information as an LLT information control field.

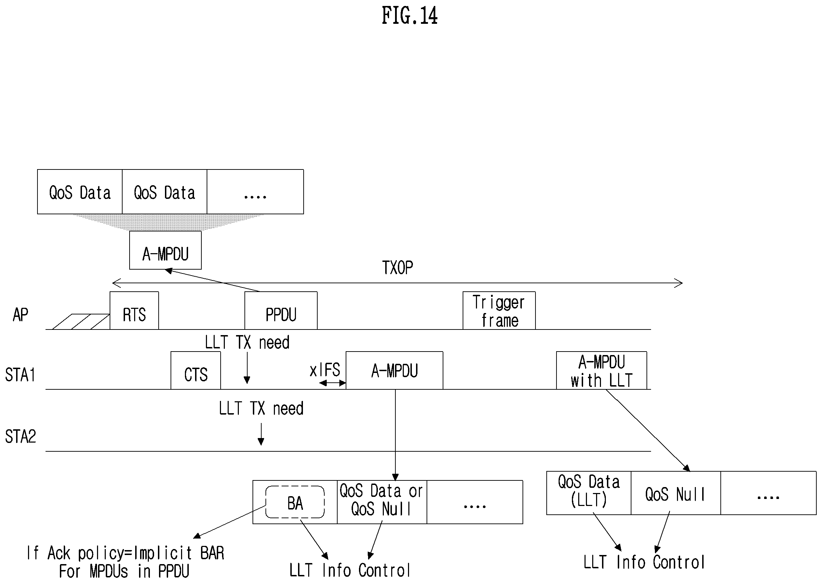

FIG. 14 relates to a method for transmitting LLT information using an HT control field (e.g., LLT information control of A-control) according to one embodiment of the present disclosure. As illustrated in FIG. 14, an AP may first obtain a TXOP through an RTS/CTS exchange and then transmit a PPDU to STA 1. In this example, an A (aggregated)-MPDU including QoS data frame(s) on the PPDU may be transmitted to STA 1.

The PPDU may include information that triggers STA 1 to transmit LLT information. STA 1, which receives the PPDU, may respond/transmit an LLT information control field including LLT information to the AP using an A-MPDU. The LLT information control field may be included in at least one of a BA frame, an additional QoS data frame, and a QoS null frame and may be responded/transmitted to the AP.

For example, if a HT control field is included in a BA frame, the HT control field (or BA frame) may be defined as a new control frame type or the +HTC field value of the MAC header may be set to 1. Accordingly, STA 1 may transmit LLT information to the AP simultaneously with ACK information for the data frame using the BA frame.

For example, if the ACK policy for MPDUs in a PPDU transmitted by an AP is a policy requiring an immediate response to a BA frame (e.g., implicit BAR), a BA frame (or BA information) may be present in the A-MPDU transmitted by STA 1. As another example, if the ACK policy for MPDUs in a PPDU transmitted by an AP is a policy not requiring an immediate response to a BA frame (e.g., ACK policy = BA), a BA frame (or BA information) may not be present in the A-MPDU transmitted by STA 1.

An AP that receives a PPDU/frame including LLT information from STA 1 can enable STA 1 to transmit LLT by transmitting a trigger frame to STA 1. Here, STA 1 may include the LLT information in a response frame (e.g., A-MPDU) to the trigger frame. As an example of the present disclosure, STA 1 can transmit the LLT information to the AP together with a BA frame and/or a data frame.

### Embodiment 1-2-2

In one embodiment of the present disclosure, it is assumed that LLT information is triggered at the same time that a (QoS) data frame is transmitted to a specific STA. If LLT exists on the specific STA, the specific STA can transmit the LLT information to the AP together with the BA frame. That is, instead of including the LLT information in another frame, the specific STA can include the LLT information in the BA frame.

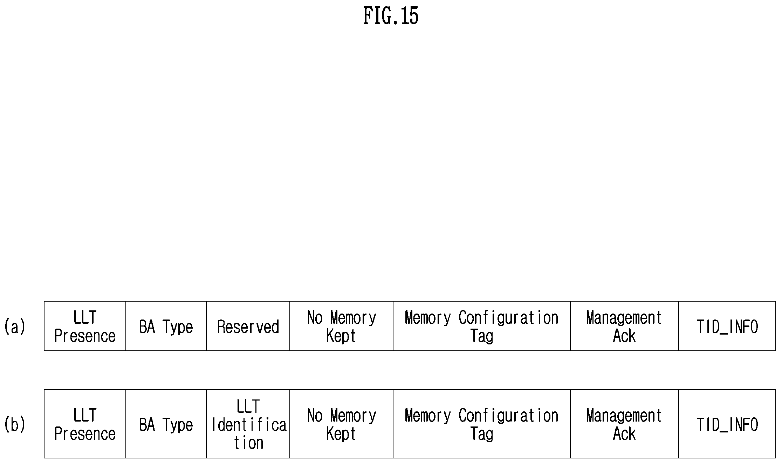

As an example of the present disclosure, FIG. 15 is a diagram for describing the configuration of a BA frame including LLT information.

As illustrated in (a) and (b) of FIG. 15, LLT information can be set/indicated through the reserved field of the BA control field regardless of the BA type of the BA frame. As another example, LLT information can be set on the 10th bit (B9) (i.e., no memory kept), the 11th bit (B10) (i.e., memory set on tag), and the 12th bit (B11) (i.e., management ACK)) of the BA control field.

For example, as shown in (a) of FIG. 15, an LLT presence field may be set on the first bit (B0) of the BA control field.

As another example, as illustrated in (b) of FIG. 15, an LLT presence field may be set on the first bit (B0) of the BA control field, and LLT identification information may be set on at least one of the sixth bit (B5) to the ninth bit (B10) of the BA control field. At this time, the LLT identification information may include a TID for the LLT that currently requires transmission, and the TID_INFO field may include information on which TID the BA frame is transmitted for (i.e., information acknowledging the success or failure of one or more MPDUs of one TID).

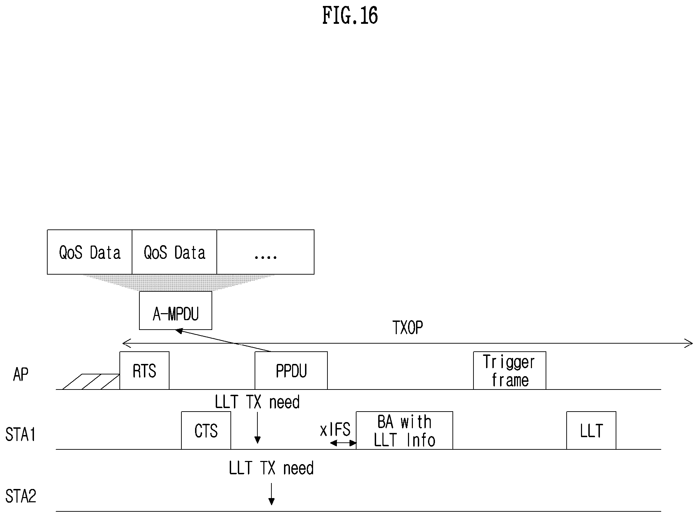

FIG. 16 is a diagram for describing a procedure for transmitting and receiving a BA frame including LLT information according to an embodiment of the present disclosure.

The AP may first obtain a TXOP through a CTS/RTS exchange and then transmit a PPDU to STA 1. For example, the PPDU may include an A-MPDU containing a QoS data frame. STA 1 may transmit a BA frame containing LLT information to the AP in response to the PPDU.

The BA frame may include BA information for ACK for the QoS data frame included in the A-MPDU. Additionally, LLT information may be included in the BA control field of the BA frame. For example, as illustrated in FIG. 15, the LLT information may be included in the BA control field. Accordingly, STA 1 may transmit ACK information and LLT information for the data frame together to the AP through the BA frame.

An AP that receives a BA frame including LLT information from STA 1 can transmit a trigger frame to STA 1. STA 1 may transmit LLT to the AP based on the trigger frame. In the present disclosure, LLT information may be included in a BA frame regardless of the BA type.

Additionally or alternatively, a new type of BA frame may be defined or an existing type of BA frame may be utilized to include LLT information. In the present disclosure, a BA frame defined to transmit LLT information is referred to as an LLT BA frame.

An LLT BA frame may include an LLT information field in addition to a basic BA frame (e.g., a frame including ACK information for a data frame). The LLT information field refers to a field containing one or more types of LLT information described above.

The LLT BA frame may satisfy at least one of the conditions described below.
- The BA type associated with the BA frame (or, BA control field) may be defined as a new type.
- The BA type in the BA control field may be a compressed BA frame variant.
- The BA information field of the LLT BA frame may be identical to the BA information field of the compressed BA frame variant.
- If the BA type of the LLT BA frame is a new type, the LLT information field may be present after the BA information field.

Additionally or alternatively, the LLT information field may utilize the Block ACK Starting Sequence Control subfield of the BA information field in at least one of the following manners.
- The fragment number subfield of the block ACK start sequence control subfield can be set to a specific value. When the fragment number subfield value is set to 4 bits (B3B2B1B0), the fragment number subfield value of the block ACK start sequence control subfield can be set to "1111".

For example, as described above, the LLT information field may be included/placed on the BA frame according to the fragment number subfield to which a specific value is set. For example, the LLT information field may be placed following the fragment number subfield to which a specific value is set. Additionally or alternatively, the start sequence control subfield or/and the block ACK bitmap subfield may not be present according to the fragment number subfield to which a specific value is set.

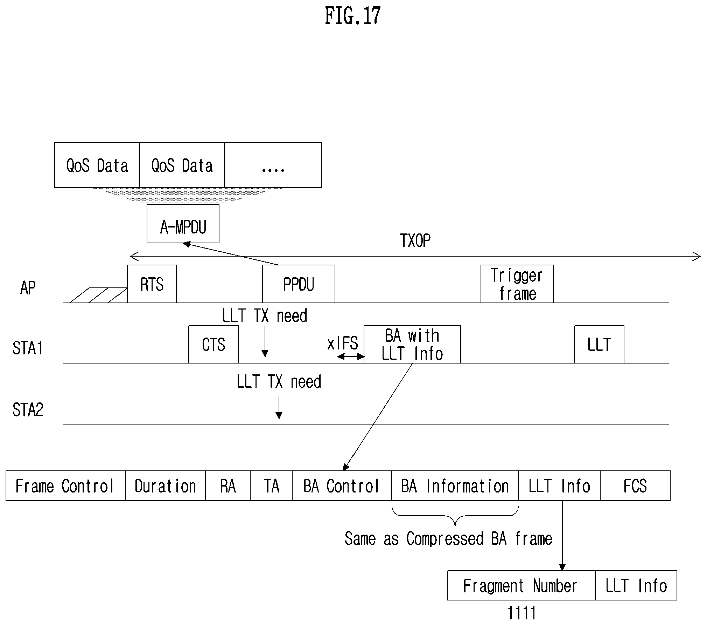

FIG. 17 is a diagram for describing the configuration of an LLT BA frame and a procedure for transmitting and receiving an LLT BA frame according to one embodiment of the present disclosure.

The AP may first obtain a TXOP through a CTS/RTS exchange and then transmit a PPDU to STA 1. For example, the PPDU may include an A-MPDU containing a QoS data frame. The PPDU may include information for STSA 1 to trigger LLT information. STA 1 may transmit a BA frame including LLT information (i.e., an LLT BA frame) to the AP in response to the PPDU.

As illustrated in FIG. 17, the LLT BA frame may include ACK information for QoS data frame(s) included in the A-MPDU, and the ACK information may be included in the BA information field. Additionally, a fragment number field set to a specific value may be present to indicate the presence of LLT information on the LLT BA frame. In this case, the fragment number field may be positioned subsequent to the BA information field including the ACK information, but is not limited thereto.

A fragment number field set to a specific value may indicate that LLT information exists after the fragment number field. Accordingly, STA 1 may transmit LLT information to the AP simultaneously with ACK information for the data frame using the LLT BA frame.

An AP that receives an LLT BA frame including LLT information from STA 1 may transmit a trigger frame to STA 1. STA 1 may transmit LLT to the AP based on the trigger frame. According to various embodiments of the present disclosure, LLT information may be included in a BA frame. For example, LLT information equal to or longer than the length of a BA information field may be included in a BA frame.

In one embodiment of the present disclosure, an LLT BA frame may satisfy at least one of the conditions described below when including information related to a multi-TID.
- The BA type in the BA control field may be defined as a new type.
- The BA type in the BA control field may be a multi-STA BA variant.
- The BA information field of the LLT BA frame is the same as the BA information field of the multi-STA BA frame, but the format of the Per AID TID Info subfield for LLT of the LLT BA frame may be different.

Specifically, the AID TID information field of the AID TID star information subfield of the LLT BA frame may be applied with at least one of the following.
- When a non-AP STA transmits an LLT BA frame, the AID 11 subfield value of the AID TID-specific information subfield (for LLT) may be set to 0 or a specific value. For example, when a non-AP STA transmits an LLT BA frame to an AP, the AID 11 subfield value may be set to a value other than 0 (e.g., 1 or 2008, etc.). Additionally or alternatively, at this time, the ACK type subfield and the TID subfield of the AID TID-specific information subfield for LLT may be set to any value. Since a non-AP STA transmits a multi-STA BA frame only to an AP, the AP can determine whether the LLT information field exists or not through the specific AID value.
- When an AP transmits a PPDU to one STA, the value of the AID 11 subfield of the AID TID-specific information subfield (for LLT) may be set to the 11 LSB of the AID of that STA. Additionally or alternatively, when an AP transmits a PPDU to one or more non-AP STAs, the value of the AID 11 subfield of the AID TID-specific information subfield (for LLT) may be set to a specific value (e.g., 0 or one of 2008 to 2044).
- The ACK type subfield of the AID TID-specific information subfield (for LLT) can be set to a specific value (e.g., 0 or 1).
- The TID subfield of the AID TID-specific information subfield (for LLT) may be set to a specific value (e.g., one of 8 to 15), except when the ACK type subfield value is set to 1 and the TID subfield value is set to 15.
- The LLT information field may be present following the AID 11 subfield, the ACK type subfield, and the TID subfield that satisfy the conditions described above. For example, if there is an AID TID information field that satisfies the conditions described above (e.g., an AID TID information field including an AID 11 subfield, an ACK type subfield, and a TID subfield), the LLT information field may be present on the AID TID-specific information subfield (for LLT).
- Additionally or alternatively, if an AID TID information field that satisfies the conditions described above (e.g., an AID TID information field including an AID 11 subfield, an ACK type subfield, and a TID subfield) is present, the Block ACK Start Sequence Control field or/and the Block ACK Bitmap field may not be present on the LLT BA frame.

Additionally or alternatively, if a specific value is set to match the conditions described above for the AID TID information field, the LLT information field may be present or included (on the LLT BA frame) instead of the Block ACK Start Sequence Control field and the Block ACK Bitmap field.

Additionally or alternatively, if a specific value is set to match the conditions described above for the AID TID information field, the LLT information field may be included instead of the Block ACK Start Sequence Control field and the Block ACK Bitmap field. Additionally or alternatively, the size of the LLT information field may be the length of the LLT information itself. Additionally or alternatively, the Block ACK Start Sequence Control field length and/or the Block ACK Bitmap field length may be included on the LLT information field.

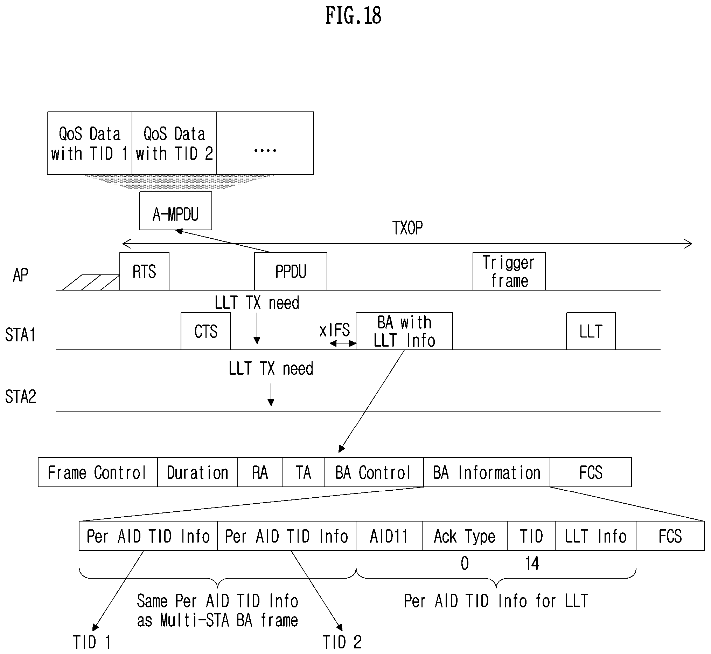

FIG. 18 is a diagram for explaining the configuration of an LLT BA frame for multi-TID and the transmission and reception procedure of LLT BA as an embodiment of the present disclosure.

The AP may first obtain a TXOP through a CTS/RTS exchange and then transmit a PPDU to STA 1. In this example, the PPDU may include a multi-TID A-MPDU including QoS data frame(s) for each of TID 1 and TID 2. The PPDU may include information for triggering transmission of LLT information by STA 1.

STA 1, which receives the corresponding PPDU, may respond to the AP with an LLT BA frame (i.e., a multi-STA BA frame including LLT information or a new type of LLT BA frame). As illustrated in FIG. 18, the corresponding LLT BA frame may include an AID TID info subfield for ACK information for the QoS data frame included in the A-MPDU (i.e., QoS data frames for TID 1 and TID 2).

Additionally, the AID TID-specific information subfield including LLT information may indicate the presence of LLT information subsequent to the AID TID-specific information subfield using a specific ACK type (e.g., 0) and TID (e.g., 14) value. Accordingly, STA 1 may transmit LLT information to the AP simultaneously with ACK information for a data frame using the LLT BA frame.

An AP that receives an LLT BA frame including LLT information from STA 1 can transmit a trigger frame to STA 1, and STA 1 can transmit LLT to the AP based on the trigger frame. As described above, the LLT BA frame can include LLT information. In addition, the LLT BA frame can include LLT information equal to or longer than the length of the BA information field, and can be applied to multi-TID.

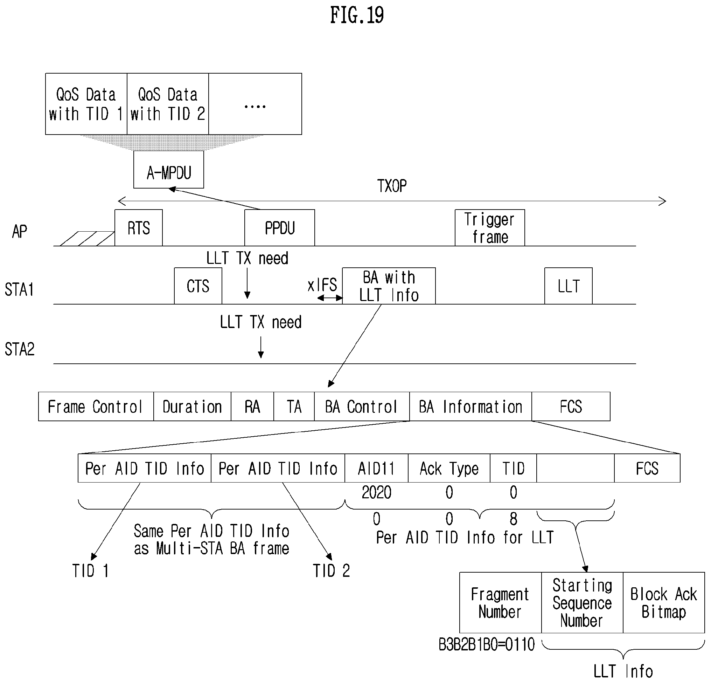

FIG. 19 is a diagram for describing the configuration of an LLT BA frame for multi-TID and the LLT BA transmission and reception procedure according to an embodiment of the present disclosure. That is, FIG. 19 relates to an example of an LLT BA frame for multi-TID that is different from FIG. 18.

The AP may first obtain a TXOP through a CTS/RTS exchange and then transmit a PPDU to STA 1. In this example, the PPDU may include a multi-TID A-MPDU containing QoS data frame(s) for each of TID 1 and TID 2. The PPDU may include information for triggering LLT information transmission of STA 1.

STA 1, which receives the corresponding PPDU, may respond to the AP with an LLT BA frame (i.e., a multi-STA BA frame including LLT information or a new type of LLT BA frame). As illustrated in FIG. 18, the corresponding LLT BA frame may include AID TID per-information (Per AID TID info) for ACK information for the QoS data frame included in the A-MPDU (i.e., QoS data frames for TID 1 and TID 2).

Additionally, the Per AID TID info including LLT information may indicate that the LLT BA frame includes LLT information through a specific AID, ACK type, and TID combination (i.e., the LLT information exists subsequent to the Per AID TID info). For example, as illustrated in FIG. 18, when the {specific AID, ACK type, TID} combination is set to {2020, 0, 0} or {0, 0, 8}, etc., it may indicate that the LLT BA frame (or the Per AID TID info subfield for LLT included in the LLT BA frame) includes LLT information.

Additionally or alternatively, the length of the field including the LLT information may be indicated through the fragment number field included in the LLT BA frame. For example, as illustrated in FIG. 19, if the fragment number field (e.g., 4 bits (B3B2B1B0)) is indicated/set to a specific value (e.g., "0110"), the LLT information may be included/set by utilizing the remaining fields excluding the fragment number field among the total 6 octets (of the AID TID-specific information subfield (for LLT)).

Additionally or alternatively, the Starting Sequence Control field may be reserved. And the names of the Fragment Number field, Starting Sequence Control field, and Block ACK field may be changed.

Therefore, STA 1 can transmit LLT information to AP simultaneously with ACK information for data frame using LL BA frame. AP that receives LLT BA frame including LLT information from STA 1 can transmit trigger frame to STA 1, and STA 1 can transmit LLT to AP based on trigger frame. As described above, LLT BA frame can include LLT information. In addition, LLT BA frame can include LLT information as long as or longer than BA information field, and can be applied to multi-TID.

### Embodiment 1-2-3

In one embodiment of the present disclosure, a field of the MAC header may be utilized to transmit LLT information.

As an example of the present disclosure, an STA may transmit a PPDU (e.g., an A-MPDU) including a more data field to an AP. The more data field may include LLT presence information indicating the presence of LLT information. For example, if an STA transmits a PPDU with a more data field value set to 1, this may indicate that there is LLT information to be transmitted by the STA to the AP.

Additionally or alternatively, the STA may transmit a PPDU (e.g., A-MPDU) including a QoS control field to the AP. When bit 4 of the QoS control field is set to 0 or 1, bit 7 of the QoS control field may indicate the presence or absence of LLT information and/or LLT presence. In this case, bit 7 of the QoS control field may be set to 0 or 1. As described above, when bit 4 of the QoS control field is set to 0 or 1 and bit 7 of the QoS control field is set to indicate the presence or absence of LLT information, LLT information may be set via at least one of bits 8 to 15 of the QoS control field.

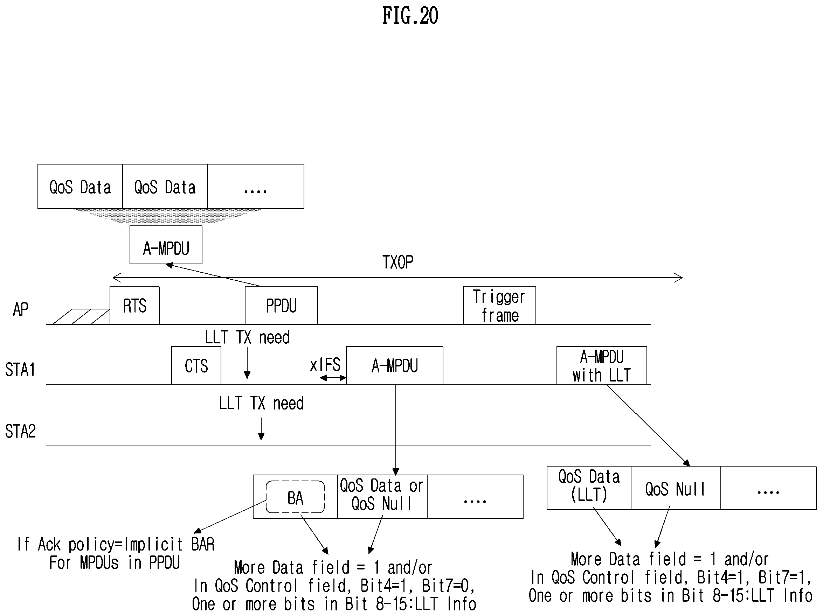

FIG. 20 is a diagram for describing a method of transmitting LLT information using a MAC header according to one embodiment of the present disclosure.

As illustrated in FIG. 20, the AP may first obtain a TXOP through an RTS/CTS exchange and then transmit a PPDU to STA 1. In this example, an A-MPDU including QoS data frame(s) on the PPDU may be transmitted to STA 1.

The PPDU may include information that triggers STA 1 to transmit LLT information. STA 1, which receives the PPDU, may transmit a more data field or/and a QoS control field containing LLT information to the AP using an A-MPDU. At this time, the more data field or/and the QoS control field may be included in the BA frame, the QoS data frame or/and the QoS null frame of the A-MPDU.

As an example of the present disclosure, if a QoS control field is included in a BA frame, the BA frame may be defined as a new control frame or BA type. Accordingly, STA 1 may transmit LLT information to the AP simultaneously with ACK information for a data frame using the BA frame.

For example, if the ACK policy is set to a policy requiring immediate response to the BA frame (e.g., implicit BAR), the PPDU transmitted by the AP on the BA frame may include BA information (for QoS data) for the MPDU(s). As another example, if the ACK policy is set to a policy not requiring immediate response to the BA frame (e.g., the ACK policy is set to BA), the PPDU transmitted by the AP on the BA frame may not include BA information (for QoS data) for the MPDU(s).

An AP that receives an LLT BA frame including LLT information from STA 1 may transmit a trigger frame to STA 1. STA 1 may include the LLT information in the MAC header of a response (e.g., A-MPDU) to the trigger frame. In the present disclosure, STA 1 may transmit LLT information to the AP simultaneously with multiple frames (e.g., BA frames, data frames, etc.).

### Embodiment 2

Embodiment 2 relates to a process for triggering LLT information and transmitting and receiving LLT information. That is, Embodiment 2 specifies the LLT information triggering procedure and the LLT information transmitting and receiving procedure in Embodiment 1 and its sub-embodiments. As described above, the STA may be a non-AP STA or an AP.

In describing the present disclosure, an STA (e.g., an AP, etc.) may acquire/initiate a TXOP by transmitting a frame/PPDU. Another STA (e.g., a non-AP STA) may receive one or more PPDUs from the STA (e.g., the AP) within the TXOP, the PPDUs including frames that trigger low-latency traffic (LLT) information. Here, the one or more PPDUs may include frames addressed to one or more STAs (e.g., QoS data frames).

Additionally or alternatively, there may be a predefined time (e.g., SIFS, PIFS) between a PPDU/frame that triggers LLT information and a frame containing LLT information responding to that PPDU/frame.

An STA (e.g., an AP) that has received one or more frames/PPDUs containing LLT information may transmit a frame/PPDU that triggers LLT based on the LLT information to another STA (e.g., a non-AP STA).

An STA that receives one or more frames including LLT information can perform a frame detection operation and obtain LLT information for each STA through the frame detection operation. One or more STAs can prepare for PPDU/frame transmission that can trigger LLT through the obtained LLT information. Since the configuration of LLT information has been described in Embodiment 1-1, a redundant description will be omitted. An STA that receives a PPDU/frame that triggers LLT can perform frame detection and prepare for LLT transmission through the frame detection.

As an example of the present disclosure, within a TXOP set by STA 1, STA 2 may transmit a frame containing LLT information to STA 1 or/and one or more other STAs. The LLT information may be transmitted to STA 1 via a response frame to the frame triggering the LLT information or via another frame.

LLT information can be transmitted and received through at least one of an HT control field (e.g., an A-control field), a BA (block ACK) frame (e.g., a BA control field of a BA frame), or a MAC header. For example, if LLT information is included in a BA frame, the BA frame can be defined as a new BA type.

Additionally or alternatively, a field including LLT information may be present after the BA information field of the BA frame or on the BA information field. Additionally or alternatively, when the BA frame is a compressed BA, the fragment number subfield of the block ACK start sequence control field may be set to a specific value to indicate that the LLT information is included in the BA frame. Additionally or alternatively, when the BA frame is a multi-STA BA frame, the AID TID information field of the Per AID TID Info subfield may be set to a specific value to indicate that the LLT information is included in the BA frame.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

The method proposed in this disclosure has been described with a focus on examples applied to IEEE 802.11-based systems, but can be applied to various wireless LANs or wireless communication systems in addition to IEEE 802.11-based systems.

## Claims

1. A method performed by a first station (STA) in a wireless local area network (WLAN) system, the method comprising:
receiving, from an access point (AP), a first physical layer protocol data unit (PPDU);
transmitting, to the AP, a block acknowledgment (BA) frame for the first PPDU, wherein the BA frame includes low latency traffic (LLT) information; and
transmitting, to the AP, an LLT related to the LLT information within a transmission opportunity (TXOP),
wherein the BA frame includes at least one field related to whether the LLT information is included in the BA frame.

2. The method of claim 1, wherein:
the AP is a TXOP holder, and
one of the first STA or the second STA is a TXOP responder.

3. The method of claim 1, wherein:
the first PPDU includes information that triggers transmission of the LLT information.

4. The method of claim 1, wherein:
the at least one field includes an association identification (AID) 11 field, an ACK type field, and a traffic identifier (TID) field.

5. The method of claim 4, wherein:
based on the AID 11 field value being set to a first value, the ACK type field value being set to a second value, and the TID field value being set to a third value, a combination of the AID 11 field, the ACK Type field, and the TID field indicates that the LLT information is included in the BA frame.

6. The method of claim 1, wherein:
a BA information field of the BA frame includes a Per AID TID Info field for LLT, and
the Per AID TID Info field includes the at least one field and a fragment number field.

7. The method of claim 6, wherein:
a length of the LLT information or a total length of a field including the LLT information is indicated by the fragment number field, and
the LLT information is set subsequent to the fragment field within the BA information field.

8. The method of claim 6, wherein:
the BA information includes ACK information for quality of service (QoS) data included in the first PPDU.

9. The method of claim 1, wherein:
the LLT information includes at least one of identification information of the LLT, information on a time point by which transmission of the LLT is to be completed, and information on an amount of the LLT.

10. A first station (STA) device in a wireless local area network (WLAN) system, the first STA comprising:
at least one transceiver; and
at least one processor connected to the at least one transceiver,
wherein the at least one processor is configured to:
receive, from an access point (AP) through the at least one transceiver, a first physical layer protocol data unit (PPDU);
transmit, to the AP through the at least one transceiver, a block acknowledgment (BA) frame for the first PPDU, wherein the BA frame includes low latency traffic (LLT) information; and
transmit, to the AP through the at least one transceiver, an LLT related to the LLT information within a transmission opportunity (TXOP),
wherein the BA frame includes at least one field related to whether the LLT information is included in the BA frame.

11. A method performed by an access point (AP) in a wireless LAN system, the method comprising:
receiving, from at least one STA, a first physical layer protocol data unit;
receiving, from the at least one STA, a block acknowledgment (BA) frame for the first PPDU, wherein the BA frame includes low latency traffic (LLT) information; and
receiving, from the at least one STA, an LLT associated with the LLT information within a transmission opportunity (TXOP),
wherein the BA frame includes at least one field related to whether the LLT information is included in the BA frame.

12. An access point (AP) performed in a wireless LAN system, the AP comprising:
at least one transceiver; and
at least one processor connected to the at least one transceiver,
wherein the at least one processor is configured to:
receive, from at least one STA through the at least one transceiver, a first physical layer protocol data unit;
receive, from the at least one STA through the at least one transceiver, a block acknowledgment (BA) frame for the first PPDU, wherein the BA frame includes low latency traffic (LLT) information; and
receive, from the at least one STA through the at least one transceiver, an LLT associated with the LLT information within a transmission opportunity (TXOP),
wherein the BA frame includes at least one field related to whether the LLT information is included in the BA frame.

13. A processing apparatus configured to control a first station (STA) in a wireless LAN system, the processing apparatus comprising:
at least one processor; and
at least one computer memory operably connected to the at least one processor and storing instructions that, based on being executed by the at least one processor, perform operations comprising:
receiving, from an access point (AP), a first physical layer protocol data unit (PPDU);
transmitting, to the AP, a block acknowledgment (BA) frame for the first PPDU, wherein the BA frame includes low latency traffic (LLT) information; and
transmitting, to the AP, an LLT related to the LLT information within a transmission opportunity (TXOP),
wherein the BA frame includes at least one field related to whether the LLT information is included in the BA frame.

14. At least one non-transitory computer-readable medium storing at least one instruction,
wherein the at least one instruction executable by at least one processor controls a device in a wireless LAN system to:
receiving, from an access point (AP), a first physical layer protocol data unit (PPDU);
transmitting, to the AP, a block acknowledgment (BA) frame for the first PPDU, wherein the BA frame includes low latency traffic (LLT) information; and
transmitting, to the AP, an LLT related to the LLT information within a transmission opportunity (TXOP),
wherein the BA frame includes at least one field related to whether the LLT information is included in the BA frame.
